# EUROPEAN PATENT APPLICATION

(11) **EP 4 404 482 A1**
(43) Date of publication of application: **24.07.2024**
(21) Application number: 22868994.9
(22) Date of filing: 25.08.2022
(51) Int. Cl.: H04B 10/69, H01L 31/0224

(54) **POWER SUPPLY MATCHING CIRCUIT, RECEIVING OPTICAL ASSEMBLY, AND PHOTOELECTRIC SYSTEM**

(30) Priority: 16.09.2021 CN 202111085773
(71) Applicant: Huawei Technologies Co., Ltd., Shenzhen, Guangdong 518129 (CN)
(72) Inventor: ZHANG, Weiwei, Shenzhen, Guangdong 518129 (CN); CHEN, Peihao, Shenzhen, Guangdong 518129 (CN); YAN, Min, Shenzhen, Guangdong 518129 (CN); WANG, Tianxiang, Shenzhen, Guangdong 518129 (CN); LI, Xu, Shenzhen, Guangdong 518129 (CN); LV, Yibo, Shenzhen, Guangdong 518129 (CN); JI, Chunhui, Shenzhen, Guangdong 518129 (CN)
(74) Representative: Epping - Hermann - Fischer
(86) International application number: PCT/CN2022/114843
(87) International publication number: WO 2023/040620

(57) **Abstract**

This application relates to a power supply matching circuit, an optical receiving assembly, and a photoelectric system. The power supply matching circuit is configured to convert a current signal of a photodetector array into a voltage signal, and the photodetector array includes a first photodetector and a second photodetector. The first photodetector includes a first cathode, a first anode, and a second cathode that are sequentially arranged. The second photodetector includes a third cathode, a second anode, and a fourth cathode that are sequentially arranged. The power supply matching circuit includes a first power electrode, a first ground electrode, a first radio frequency electrode, and a second radio frequency electrode. The first anode is electrically connected to the first radio frequency electrode, the second anode is electrically connected to the second radio frequency electrode, both the second cathode and the third cathode are electrically connected to the first ground electrode, and the fourth cathode is electrically connected to the first power electrode. In this application, a design of sharing the first ground electrode and the first power electrode greatly simplifies an electrode arrangement of the power supply matching circuit, and reduces design complexity.

## Description

This application claims priority to Chinese Patent Application No. 202111085773.0, filed with the China National Intellectual Property Administration on September 16, 2021 and entitled "POWER SUPPLY MATCHING CIRCUIT, OPTICAL RECEIVING ASSEMBLY, AND PHOTOELECTRIC SYSTEM", which is incorporated herein by reference in its entirety.

### TECHNICAL FIELD

The present invention relates to the field of optical communication technologies, and in particular, to a power supply matching circuit, an optical receiving assembly, and a photoelectric system.

### BACKGROUND

With continuous development of next-generation mobile communication, people's requirements for a communication capacity have been constantly increasing. Fields such as an internet of vehicles, industrial control, a smart home, environment monitoring, and virtual reality pose increasingly high requirements for a rate, a capacity, power consumption, and the like of mobile communication. However, a conventional optical fiber communication technology cannot meet increasing requirements. Therefore, a wavelength division multiplexing technology that can improve a communication rate emerges.

In the wavelength division multiplexing technology, a photodetector is important in converting an optical signal into a current signal. However, the current signal cannot be directly processed, and is generally converted into a voltage signal. In an available method, this is implemented by using a trans-impedance amplifier. However, an integrated chip trans-impedance amplifier is expensive, and a large quantity of processes such as wire bonding are required, resulting in high costs and poor reconfigurability. In a conventional technology, a lumped element may alternatively be used at a back end of a photodetector array to implement packaging. However, a direct current channel and an alternating current channel need to be designed for each photodetector, each photodetector needs to be independently powered, and a quantity of components such as capacitors or resistors is multiplied as a quantity of photodetectors in the array increases. As a result, an entire system is quite complex.

Therefore, it is necessary to design a power supply matching circuit, so that conversion from the current signal into the voltage signal can be implemented, and requirements for a simple structure, low costs, and strong reconfigurability can be met.

### SUMMARY

Embodiments of this application provide a power supply matching circuit, an optical receiving assembly, and a photoelectric system. The power supply matching circuit in this application has a small quantity of electrodes, a small quantity of components, and a simple structure. This effectively reduces costs and a volume of the power supply matching circuit. In addition, a lumped element such as a resistor or a capacitor, and an electrode may be adjusted as required, and therefore reconfigurability is strong.

According to a first aspect, an embodiment of this application provides a power supply matching circuit. The power supply matching circuit is configured to convert a current signal of a photodetector array into a voltage signal. The photodetector array includes a first photodetector and a second photodetector. The first photodetector includes a first cathode, a first anode, and a second cathode that are sequentially arranged, and the first cathode is electrically connected to the second cathode. The second photodetector includes a third cathode, a second anode, and a fourth cathode that are sequentially arranged, and the third cathode is electrically connected to the fourth cathode. The power supply matching circuit includes a first power electrode, a first ground electrode, a first radio frequency electrode, and a second radio frequency electrode. The first anode is electrically connected to the first radio frequency electrode, the second anode is electrically connected to the second radio frequency electrode, both the second cathode and the third cathode are electrically connected to the first ground electrode, and the fourth cathode is electrically connected to the first power electrode. In this implementation, the first power electrode supplies power to the first photodetector and the second photodetector.

In this application, the first photodetector and the second photodetector share one first ground electrode, and the first photodetector and the second photodetector share one first power electrode, so that quantities of ground electrodes and power electrodes are reduced, a structure is simple, and costs are low. If the first photodetector and the second photodetector cannot share one first ground electrode and one first power electrode, the first photodetector requires one ground electrode, one power electrode, and one radio frequency electrode, and the second photodetector also requires one ground electrode, one power electrode, and one radio frequency electrode. In other words, six electrodes in total are required. However, in this application, the ground electrode and the power electrode are shared, so that only one first ground electrode, one first power electrode, one first radio frequency electrode, and one second radio frequency electrode are required. In other words, four electrodes in total are required. This reduces a quantity of electrodes. In this way, when a quantity of photodetectors increases, for example, when a third photodetector, a fourth photodetector, and a fifth photodetector are included, the quantity of electrodes is greatly reduced. In this application, a design in which the first photodetector and the second photodetector share the first ground electrode and the first power electrode greatly simplifies an electrode arrangement of the power supply matching circuit, a structure is simple, design complexity is reduced, and system costs and a volume are greatly reduced.

In a possible implementation, the first radio frequency electrode, the first ground electrode, the second radio frequency electrode, and the first power electrode are sequentially arranged at spacings. Being arranged at spacings means that the first radio frequency electrode, the first ground electrode, the second radio frequency electrode, and the first power electrode are not in contact with each other, that is, there is a gap. In this way, a current signal can be effectively transmitted, and different current signals do not interfere with each other, avoiding a short circuit caused by contact. In addition, the first radio frequency electrode, the first ground electrode, the second radio frequency electrode, and the first power electrode are sequentially arranged. This facilitates a connection to the first photodetector and the second photodetector, so that a length of a connected lead is minimum, and the first photodetector and the second photodetector share one first ground electrode and one first power electrode.

In a possible implementation, the power supply matching circuit is provided with a lumped element. The lumped element is electrically connected to the first power electrode, the first ground electrode, the first radio frequency electrode, and the second radio frequency electrode, to convert the current signal into the voltage signal. In other words, the lumped element works together with the first power electrode, the first ground electrode, the first radio frequency electrode, and the second radio frequency electrode to convert the current signal into the voltage signal. The lumped element may be a resistor element, a capacitor element, a filtering element, or the like.

In a possible implementation, the lumped element includes a first resistor. The first power electrode includes a first sub-power electrode and a second sub-power electrode. The fourth cathode is electrically connected to the first sub-power electrode. The first resistor connects the first sub-power electrode to the second sub-power electrode. The first resistor is to divide a voltage, limit a current, and protect the first photodetector and the second photodetector.

In a possible implementation, the lumped element includes a filtering element. The first power electrode includes a third sub-power electrode. The first sub-power electrode, the second sub-power electrode, and the third sub-power electrode are sequentially arranged. The filtering element connects the second sub-power electrode to the third sub-power electrode, and is configured to protect a power supply. The first resistor connects the first sub-power electrode to the second sub-power electrode, and the filtering element connects the second sub-power electrode to the third sub-power electrode, so that a direct current can flow from the third sub-power electrode to the second sub-power electrode to the first sub-power electrode sequentially. In addition, the first resistor can divide the voltage and limit the current. The filtering element is mainly to prevent a radio frequency signal from entering the power, and protect the power supply.

It may be understood that, in another implementation, the filtering element may alternatively connect the first sub-power electrode to the second sub-power electrode, and the first resistor may alternatively connect the second sub-power electrode to the third sub-power electrode.

In a possible implementation, the lumped element includes a first capacitor. The first radio frequency electrode includes a first sub-electrode and a second sub-electrode. The first anode is electrically connected to the first sub-electrode. The first capacitor connects the first sub-electrode to the second sub-electrode. The second radio frequency electrode includes a third sub-electrode and a fourth sub-electrode. The second anode is electrically connected to the third sub-electrode. The first capacitor connects the third sub-electrode to the fourth sub-electrode. There may be two first capacitors. One first capacitor is disposed on the first radio frequency electrode, and one first capacitor is disposed on the second radio frequency electrode. The first capacitor is mainly to perform blocking. The first capacitor on the first radio frequency electrode is used as an example. To be specific, after reaching the first sub-electrode, a direct current generated by the first power electrode cannot continue to reach the second sub-electrode, but reaches the first ground electrode to form a loop. This blocks the direct current. Similarly, after reaching the third sub-electrode, the direct current generated by the first power electrode cannot continue to reach the fourth sub-electrode, but reaches the first ground electrode to form a loop. This blocks the direct current. It should be noted that capacitance of the first capacitor on the first radio frequency electrode may be the same as or different from capacitance of a first capacitor on the second radio frequency electrode. This is not limited in this application.

In a possible implementation, the lumped element includes a second capacitor. The first ground electrode includes a first sub-ground electrode and a second sub-ground electrode. Both the second cathode and the third cathode are electrically connected to the first sub-ground electrode. The second capacitor connects the first sub-ground electrode to the second sub-ground electrode. The second capacitor is mainly to perform blocking. To be specific, after reaching the first sub-ground electrode, the direct current generated by the first power electrode cannot continue to reach the second sub-ground electrode, but reaches the second cathode to supply power to the first photodetector. This blocks the direct current.

In a possible implementation, the lumped element includes a second resistor. The second resistor connects the first sub-electrode to the second sub-ground electrode. There may be two second resistors. One second resistor connects the first sub-electrode to the second sub-ground electrode, and the other second resistor connects the second sub-ground electrode to the third sub-electrode. The second resistor is a part of a direct current channel, and can provide a loop for the direct current channel. The second resistor can implement radio frequency matching, reduce a standing wave ratio of a port, and convert the current signal into the voltage signal. It should be noted that a resistance value of the second resistor connecting the first sub-electrode to the second sub-ground electrode may be the same as or different from a resistance value of the second resistor connecting the first sub-electrode to the second sub-ground electrode. This is not limited in this application. The first power electrode supplies power to the first photodetector and the second photodetector. Specifically, the direct current supplied by the first power electrode is transmitted to the fourth cathode. On one hand, the direct current transmitted to the fourth cathode is transmitted to the second anode, flows through a lead, and then sequentially passes through the third sub-electrode and the second resistor to the second sub-ground electrode, to implement a loop and supply power to the second photodetector. On the other hand, the direct current transmitted to the fourth cathode is transmitted to the third cathode, flows through the lead, and then sequentially passes through the first sub-ground electrode, the second cathode, the first anode, the first sub-electrode, and the second resistor to the second sub-ground electrode, to implement a loop and supply power to the first photodetector. The direct current channel in this application mainly provides a reversed bias voltage for the photodetector, to supply power to the photodetector.

Two different optical signals are converted into alternating current signals (namely, radio frequency signals) after being respectively transmitted to a first photosensitive surface and a second photosensitive surface. One optical signal that enters the first photodetector from the first photosensitive surface is converted into the alternating current signal. Then, the alternating current signal is transmitted to the first anode, flows through the lead, and is transmitted to the first sub-electrode. Subsequently, the alternating current signal sequentially flows through the first capacitor and the second sub-electrode, and enters a back-end circuit. On one hand, the signal of the back-end circuit is sequentially transmitted to the second sub-ground electrode, the second capacitor, and the first sub-ground electrode to implement a radio frequency loop. The other optical signal that enters the second photodetector from the second photosensitive surface is converted into the alternating current signal. Then, the alternating current signal is transmitted to the second anode, flows through the lead, and is transmitted to the third sub-electrode. Subsequently, the alternating current signal sequentially passes through the first capacitor and the fourth sub-electrode, and enters the back-end circuit. On the other hand, the signal of the back-end circuit is sequentially transmitted to the second sub-ground electrode, the second capacitor, and the first sub-ground electrode, to implement a radio frequency loop.

In a possible implementation, the first photodetector, the second photodetector, and the power supply matching circuit form one submodule, and there are at least two submodules. As the quantity of submodules increases, a quantity of photodetectors increases, and a quantity of photoelectric signals that can be transmitted increases accordingly. In this application, the first power electrode and the first ground electrode can be shared. In this way, as the quantity of photodetectors increases, a quantity of electrodes and quantities of resistors and capacitors in the lumped element can be greatly reduced. This reduces design complexity, and greatly reduces system costs and a volume.

In a possible implementation, the photodetector array includes a third photodetector. The third photodetector includes a fifth cathode, a third anode, and a sixth cathode that are sequentially arranged. The power supply matching circuit includes a third radio frequency electrode and a second ground electrode. The fifth cathode is electrically connected to the first power electrode. The third anode is electrically connected to the third radio frequency electrode. The sixth cathode is electrically connected to the second ground electrode. The photodetector array provided in this implementation includes three photodetectors. In this implementation, a power electrode and a ground electrode can be shared. In this way, as the quantity of photodetectors increases, a quantity of electrodes and quantities of resistors and capacitors in the lumped element can be greatly reduced. This reduces design complexity, and greatly reduces system costs and a volume. In this implementation, there are two ground electrodes. For differentiation, one is referred to as the first ground electrode, and the other is referred to as the second ground electrode.

In a possible implementation, the first radio frequency electrode, the first ground electrode, the second radio frequency electrode, the first power electrode, the third radio frequency electrode, and the second ground electrode are sequentially arranged at spacings. Being arranged at spacings means that the first radio frequency electrode, the first ground electrode, the second radio frequency electrode, the first power electrode, the third radio frequency electrode, and the second ground electrode are not in contact with each other, that is, there is a gap. In this way, the current signal can be effectively transmitted, and different current signals do not interfere with each other, avoiding a short circuit caused by contact. In addition, the first radio frequency electrode, the first ground electrode, the second radio frequency electrode, the first power electrode, the third radio frequency electrode, and the second ground electrode are sequentially arranged. This facilitates a connection to the first photodetector, the second photodetector, and the third photodetector, so that a length of a connected lead is minimum, and the first photodetector, the second photodetector, and the third photodetector share one power electrode.

In a possible implementation, the power supply matching circuit includes a second power electrode. The first cathode is electrically connected to the second power electrode. In this implementation, there are two power electrodes. For differentiation, one is referred to as the first power electrode, and the other is referred to as the second power electrode. In this implementation, the first photodetector and the second photodetector share one ground electrode, but do not share a same power electrode. The first power electrode supplies power to the second photodetector, and the second power electrode supplies power to the first photodetector. Because sharing of the first ground electrode is implemented, design complexity of the power supply matching circuit can also be reduced.

According to a second aspect, this application provides an optical receiving assembly, including a demultiplexer, a photodetector array, and the power supply matching circuit according to any one of the foregoing implementations. The photodetector array includes an input end and an output end. The demultiplexer is connected to the input end. The power supply matching circuit is connected to the output end. A plurality of optical signals are combined into one optical signal by using a multiplexer. The one optical signal can be transmitted to a remote end through a single-mode optical fiber. Then, the one optical signal is divided into a plurality of optical signals by using the demultiplexer, and the signals are fed into a corresponding photodetector array through the input end. The photodetector array converts the optical signal into a current signal, and then the current signal is transmitted to the power supply matching circuit through the output end. The power supply matching circuit converts the current signal into a voltage signal.

According to a third aspect, this application provides a photoelectric system, including an optical emitting assembly, an optical fiber, and the optical receiving assembly according to the second aspect. The optical fiber connects the optical emitting assembly to the optical receiving assembly. The photoelectric system is a wavelength division multiplexing system. A wavelength division multiplexing technology means transmitting a plurality of optical signals over one optical fiber at the same time. At a transmit end, the optical signals of a plurality of wavelengths need to be combined into one optical signal by using a multiplexer. Then, the one optical signal is transmitted to a remote end through the optical fiber, and is divided by using a demultiplexer. Signals are fed into a photodetector to be converted into current signals. Then, the current signals enter a subsequent circuit for processing.

The power supply matching circuit in this application has a simple structure. At least two photodetectors can share one first power electrode, and two adjacent photodetectors can share one first ground electrode. This reduces quantities of ground electrodes and power electrodes, and quantities of resistors and capacitors required in the lumped element. In this way, when the quantity of photodetectors increases, for example, when there are three photodetectors, four photodetectors, or five photodetectors, the quantity of electrodes and the quantity of resistors and capacitors in the lumped element are greatly reduced. The power supply matching circuit in this application has a simple structure. This reduces design complexity of a power supply matching circuit, and has low costs and a small volume.

### BRIEF DESCRIPTION OF DRAWINGS

To describe technical solutions in embodiments of the present invention or in the background more clearly, the following describes accompanying drawings that need to be used in embodiments of the present invention or in the background.
FIG. 1 shows an application scenario of wavelength division multiplexing according to an embodiment of this application;
FIG. 2 is a schematic diagram of a structure of wavelength division multiplexing according to an embodiment of this application;
FIG. 3 is a schematic diagram of a structure of a photoelectric module according to an embodiment of this application;
FIG. 4 is a schematic diagram of a planar structure of a photoelectric module according to an embodiment of this application;
FIG. 5 is a schematic diagram of a three-dimensional structure of a photoelectric module according to another embodiment of this application;
FIG. 6 is a schematic diagram of a planar structure of a photoelectric module according to another embodiment of this application;
FIG. 7 is a schematic diagram of a three-dimensional structure of a photoelectric module according to another embodiment of this application;
FIG. 8 is a schematic diagram of a planar structure of a photoelectric module according to another embodiment of this application;
FIG. 9 is a schematic diagram of a three-dimensional structure of a photoelectric module according to another embodiment of this application;
FIG. 10 is a schematic diagram of a planar structure of a photoelectric module according to another embodiment of this application; and
FIG. 11 is a schematic diagram of a structure of a photoelectric module according to another implementation of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

With continuous and rapid development of data communication technologies, people's requirements for a communication capacity have been constantly increasing. Therefore, a multiplexing technology that can improve a communication rate emerges. Common multiplexing technologies in communication include frequency division multiplexing (Frequency Division Multiplexing, FDM), time division multiplexing (Time Division Multiplexing, TDM), code division multiplexing (Code Division Multiplexing, CDM), and wavelength division multiplexing (Wavelength Division Multiplexing, WDM).

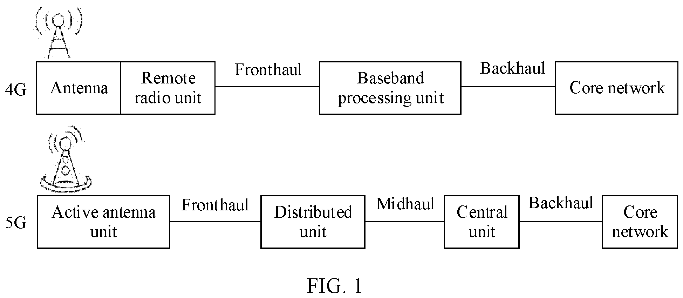

FIG. 1 shows an application scenario of wavelength division multiplexing. A high-speed digital optical module used in scenarios such as a 4G fronthaul, a 5G fronthaul, and a data center generally uses wavelength division multiplexing or the like. A wavelength division multiplexing technology means transmitting a plurality of optical signals over one optical fiber at the same time. At a transmit end, the optical signals of a plurality of wavelengths need to be combined into one optical signal by using a multiplexer (Multiplexer, MUX). Then, the one optical signal is transmitted to a remote end through the optical fiber, and is divided by using a demultiplexer (Demultiplexer, DEMUX). Signals are fed into a photodetector to be converted into current signals. Then, the current signals enter a subsequent circuit for processing.

4G communication is used as an example. An antenna and a remote radio unit are connected by using a feeder. The antenna is mainly used for a conversion between a pilot wave on a cable and a space wave in air. The remote radio unit is mainly used for radio frequency processing. Fronthaul is a network between the remote radio unit and a baseband processing unit. Backhaul is a communication bearer between the baseband processing unit and a core network. The wavelength division multiplexing technology may be applied to the fronthaul of 4G communication to implement signal transmission.

5G communication is used as an example. A fronthaul connects an active antenna unit to a distributed unit. A midhaul connects the distributed unit to a central unit. A backhaul connects the central unit to a core network. The backhaul is a communication bearer between the central unit and the core network. The wavelength division multiplexing technology may be applied to the fronthaul of 5G communication to implement signal transmission.

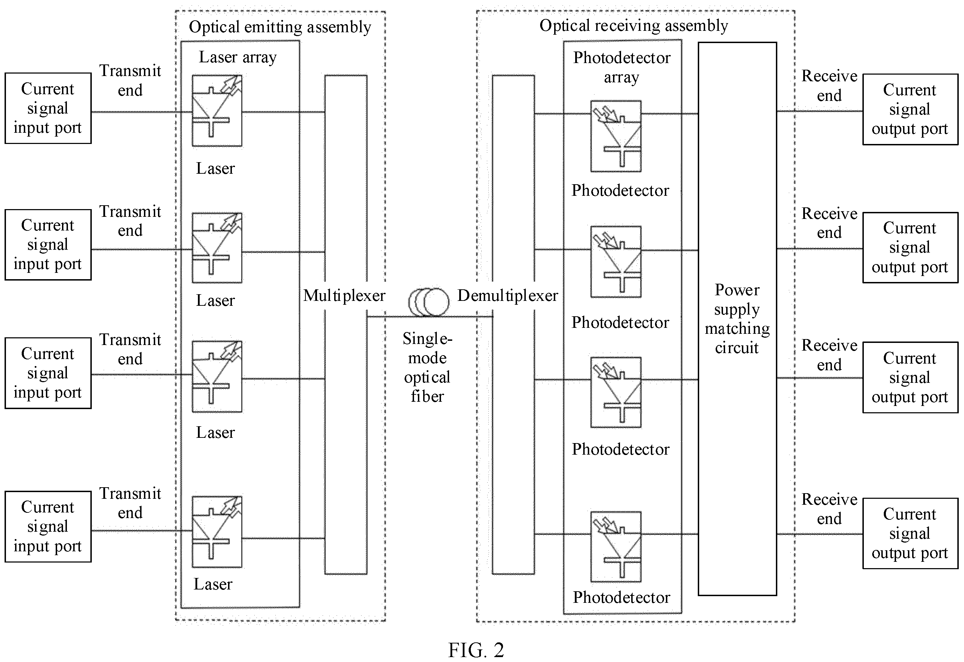

FIG. 2 is a schematic diagram of a structure of wavelength division multiplexing. This application provides a photoelectric system. The photoelectric system is a wavelength division multiplexing system. The photoelectric system includes a current signal input port, an optical emitting assembly, a single-mode optical fiber, an optical receiving assembly, and a current signal output port. The optical emitting assembly includes a laser and a multiplexer. The optical receiving assembly includes a demultiplexer, a photodetector (photodetector, PD), and a power supply matching circuit. The single-mode optical fiber connects the optical emitting assembly to the optical receiving assembly. In the wavelength division multiplexing system, a plurality of current signals are transmitted, at a transmit end through the current signal input port, to a laser array (the laser array includes a plurality of lasers). The laser array is configured to convert the current signal into an optical signal. It should be noted that in FIG. 2, four current signals are used as an example. The four current signals are transmitted, at four transmit ends through four current signal input ports, to four lasers, to form four optical signals. In another implementation, there may alternatively be three current signals and the three current signals correspond to three current signal input ports. Alternatively, there may be five current signals and the five current signals correspond to five current signal input ports. Alternatively, there may be six, seven, eight, or more current signals, which is not limited in this application.

A plurality of optical signals are combined into one optical signal by using the multiplexer. The one optical signal may be transmitted to a remote end through the single-mode optical fiber. Then, the one optical signal is divided into a plurality of optical signals by using the demultiplexer, and the signals are fed into a corresponding photodetector array (the photodetector array includes a plurality of photodetectors). The photodetector array converts the optical signal into a current signal, but the current signal cannot be directly processed. As a result, the current signal is generally converted into a voltage signal. The power supply matching circuit can convert the current signal into the voltage signal. The voltage signal enters, at a receive end through the current signal output port, a subsequent circuit for processing. The power supply matching circuit may be a thin film circuit or a circuit board circuit. A resistor element on the thin film circuit may be fastened to a dielectric substrate by using an evaporation process or a welding process. A capacitor element is usually fastened to the dielectric substrate by using a welding process. A resistor element and a capacitor element on the circuit board circuit are usually fastened to a high-frequency circuit board material by using a welding process. The high-frequency circuit board material may be an epoxy glass cloth laminated sheet or another circuit board material.

In this application, a structure of a power supply matching circuit 30 is designed and the power supply matching circuit 30 is connected to the photodetector, so that the current signal is converted into the voltage signal. In addition, the power supply matching circuit 30 in this application has a simple structure, strong reconfigurability, and low costs.

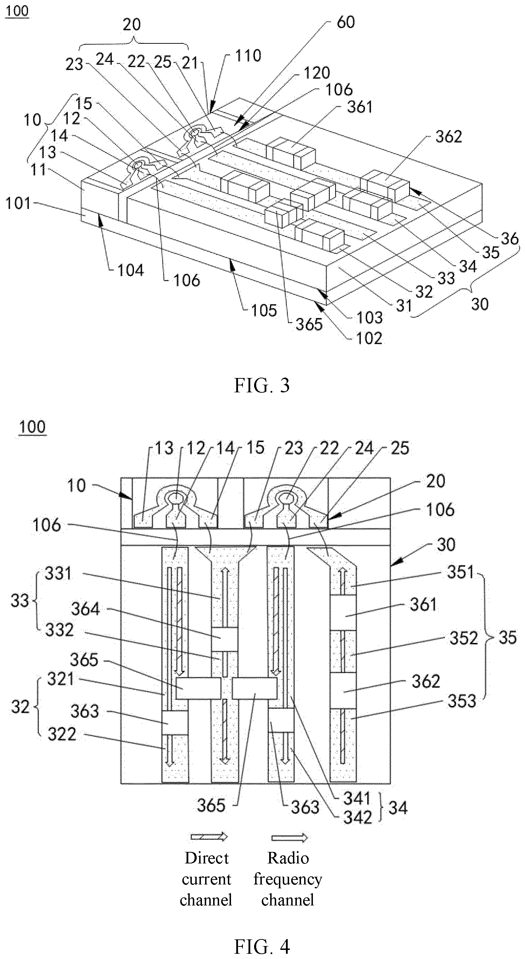

FIG. 3 is a schematic diagram of a structure of a photoelectric module 100. The photoelectric module 100 includes a power supply matching circuit 30 and a photodetector array 60. The photodetector array 60 includes a first photodetector 10 and a second photodetector 20. It may also be understood as that the photoelectric module 100 includes the first photodetector 10, the second photodetector 20, and the power supply matching circuit 30, and the first photodetector 10, the second photodetector 20, and the power supply matching circuit 30 are all located on a bearing substrate 101. The bearing substrate 101 includes a bottom surface 102 and a top surface 103 that are disposed opposite to each other. The top surface 103 includes a first area 104 and a second area 105. The first photodetector 10 and the second photodetector 20 (namely, the photodetector array 60) are located in the first area 104, and the power supply matching circuit 30 is located in the second area 105. It may be understood that the photodetector array 60 is provided with an input end 110 and an output end 120. A demultiplexer is connected to the input end 110, and the power supply matching circuit 30 is connected to the output end 120. The demultiplexer divides one optical signal into a plurality of optical signals. Then, the plurality of signals are fed into a corresponding photodetector array (including the first photodetector 10 and the second photodetector 20) through the input end 110. The photodetector array converts the optical signal into a current signal, and then the power supply matching circuit 30 converts the current signal into a voltage signal. The voltage signal is transmitted to a back-end circuit, to implement signal transmission.

The first photodetector 10 includes a first photosensitive surface 12, and a first cathode 13, a first anode 14, and a second cathode 15 that are sequentially arranged. The first photosensitive surface 12, the first cathode 13, the first anode 14, and the second cathode 15 are all located on a first detector substrate 11. The first detector substrate 11 is located in the first area 104. The first cathode 13 is electrically connected to the second cathode 15. The first anode 14 is located on the first photosensitive surface 12. It may be understood that, because the first cathode 13 is electrically connected to the second cathode 15, the first cathode 13 and the second cathode 15 may also be considered as two ends of one cathode. This application distinguishes the first cathode 13 from the second cathode 15 for ease of description only.

The second photodetector 20 includes a second photosensitive surface 22, and a third cathode 23, a second anode 24, and a fourth cathode 25 that are sequentially arranged. The second photosensitive surface 22, the third cathode 23, the second anode 24, and the fourth cathode 25 are all located on a second detector substrate 21. The second detector substrate 21 is located in the first area 104. The second detector substrate 21 and the first detector substrate 11 may be integrally interconnected and form a flat plate structure. The second detector substrate 21 and the first detector substrate 11 may alternatively be a split structure. The third cathode 23 is electrically connected to the fourth cathode 25. The second anode 24 is located on the second photosensitive surface 22. It may be understood that, because the third cathode 23 is electrically connected to the fourth cathode 25, the third cathode 23 and the fourth cathode 25 may also be considered as two ends of one cathode. This application distinguishes the third cathode 23 from the fourth cathode 25 for ease of description only.

The power supply matching circuit 30 includes a first radio frequency electrode 32, a first ground electrode 33, a second radio frequency electrode 34, and a first power electrode 35. The first radio frequency electrode 32, the first ground electrode 33, the second radio frequency electrode 34, and the first power electrode 35 are located on a dielectric substrate 31. The first radio frequency electrode 32, the first ground electrode 33, the second radio frequency electrode 34, and the first power electrode 35 are sequentially arranged at spacings. Being arranged at spacings means that the first radio frequency electrode 32, the first ground electrode 33, the second radio frequency electrode 34, and the first power electrode 35 are not in contact with each other, that is, there is a gap. In this way, a current signal may be effectively transmitted, and different current signals do not interfere with each other, thereby avoiding a short circuit caused by contact. In addition, the first radio frequency electrode 32, the first ground electrode 33, the second radio frequency electrode 34, and the first power electrode 35 are sequentially arranged. This facilitates a connection to the first photodetector 10 and the second photodetector 20, so that a length of a connected lead 106 is minimum, and the first photodetector 10 and the second photodetector 20 share one first ground electrode 33 and one first power electrode 35.

In a specific implementation, the power supply matching circuit 30 is provided with a lumped element 36. The lumped element 36 is electrically connected to the first radio frequency electrode 32, the first ground electrode 33, the second radio frequency electrode 34, and the first power electrode 35. The lumped element 36 works together with the first power electrode 35, the first ground electrode 33, the first radio frequency electrode 32, and the second radio frequency electrode 34 to convert the current signal into the voltage signal.

The first photodetector 10 and the second photodetector 20 are configured to convert the optical signal into the current signal. The power supply matching circuit 30 is configured to convert the current signal into the voltage signal. Both the first photodetector 10 and the second photodetector 20 are electrically connected to the power supply matching circuit 30. Specifically, the first anode 14 is electrically connected to the first radio frequency electrode 32 through the lead 106, and the second anode 24 is electrically connected to the second radio frequency electrode 34 through the lead 106. Both the second cathode 15 and the third cathode 23 are electrically connected to the first ground electrode 33 through the lead 106. That is, the first photodetector 10 and the second photodetector 20 share one first ground electrode 33. The fourth cathode 25 is electrically connected to the first power electrode 35 through the lead 106. The first power electrode 35 can supply power to the second photodetector 20 and can supply power to the first photodetector 10. It should be noted that there are five leads 106 in total in FIG. 3, and only two leads 106 are shown in FIG. 3 as an example. The lead 106 may be made of a gold material, and is configured to well electrically connect the first photodetector 10 and the second photodetector 20 to the power supply matching circuit 30.

A principle that the first photodetector 10 and the second photodetector 20 share one first ground electrode 33 is as follows: The second cathode 15 of the first photodetector 10 is electrically connected to the first ground electrode 33 through one lead 106, and the third cathode 23 of the second photodetector 20 is electrically connected to the first ground electrode 33 through another lead 106. That is, the first photodetector 10 and the second photodetector 20 share one first ground electrode 33.

A principle that the first photodetector 10 and the second photodetector 20 share one first power electrode 35 is as follows: The fourth cathode 25 of the second photodetector 20 is electrically connected to the first power electrode 35, and a direct current supplied by the first power electrode 35 is transmitted to the fourth cathode 25, so that the first power electrode 35 supplies power to the second photodetector 20. In addition, because the fourth cathode 25 is electrically connected to the third cathode 23, the direct current transmitted to the fourth cathode 25 is transmitted to the third cathode 23, and continues to be sequentially transmitted to the first ground electrode 33 and the second cathode 15, so that the first power electrode 35 supplies power to the first photodetector 10. In short, the direct current supplied by the first power electrode 35 sequentially passes through the fourth cathode 25, the third cathode 23, the first ground electrode 33, and the second cathode 15, to supply power to the first photodetector 10 and the second photodetector 20. That is, the first photodetector 10 and the second photodetector 20 share one first power electrode 35.

In this application, the first photodetector 10 and the second photodetector 20 share one first ground electrode 33, and the first photodetector 10 and the second photodetector 20 share one first power electrode 35, so that quantities of first ground electrodes 33 and first power electrodes 35, and quantities of resistors, capacitors, and inductors required in the lumped element 36 are reduced, a structure is simple, and costs are low. If the first photodetector 10 and the second photodetector 20 cannot share one first ground electrode 33 and one first power electrode 35, the first photodetector 10 requires one ground electrode, one power electrode, and one radio frequency electrode, and the second photodetector 20 also requires one ground electrode, one power electrode, and one radio frequency electrode. In other words, six electrodes in total are required. However, in this application, the first ground electrode 33 and the first power electrode 35 are shared, so that only one first ground electrode 33, one first power electrode 35, one first radio frequency electrode 32, and one second radio frequency electrode 34 are required. In other words, four electrodes in total are required. This reduces a quantity of electrodes. In this way, when a quantity of photodetectors increases, for example, when a third photodetector, a fourth photodetector, and a fifth photodetector are included, the quantity of electrodes and the quantities of resistors, capacitors, and inductors in the lumped element 36 are greatly reduced. In this application, a design in which the first photodetector 10 and the second photodetector 20 share the first ground electrode 33 and the first power electrode 35 greatly simplifies an electrode arrangement of the power supply matching circuit 30 and reduces the quantities and layouts of resistors, capacitors, and inductors in the lumped element 36, a structure is simple, design complexity is reduced, and system costs and a volume are greatly reduced.

Refer to FIG. 3 and FIG. 4. FIG. 4 is a schematic diagram of a planar structure of the photoelectric module 100. The lumped element 36 includes a first resistor 361, a filtering element 362, a first capacitor 363, a second capacitor 364, and a second resistor 365. The lumped element 36 is electrically connected to the first radio frequency electrode 32, the first ground electrode 33, the second radio frequency electrode 34, and the first power electrode 35, to convert the current signal into the voltage signal.

Specifically, the first radio frequency electrode 32 includes a first sub-electrode 321 and a second sub-electrode 322. The first sub-electrode 321 is close to the first anode 14. The first anode 14 is electrically connected to the first sub-electrode 321 through the lead 106. The first capacitor 363 connects the first sub-electrode 321 to the second sub-electrode 322.

The first ground electrode 33 includes a first sub-ground electrode 331 and a second sub-ground electrode 332. The first sub-ground electrode 331 is close to the second cathode 15 and the third cathode 23. Both the second cathode 15 and the third cathode 23 are electrically connected to the first sub-ground electrode 331 through the lead 106. The second capacitor 364 connects the first sub-ground electrode 331 to the second sub-ground electrode 332.

The second radio frequency electrode 34 includes a third sub-electrode 341 and a fourth sub-electrode 342. The third sub-electrode 341 is close to the second anode 24. The second anode 24 is electrically connected to the third sub-electrode 341 through the lead 106. The first capacitor 363 connects the third sub-electrode 341 to the fourth sub-electrode 342.

It may be understood that, in this implementation, there are two first capacitors 363. One first capacitor 363 connects the first sub-electrode 321 to the second sub-electrode 322. The other first capacitor 363 connects the third sub-electrode 341 to the fourth sub-electrode 342.

It should be noted that capacitance of the first capacitor 363 on the first radio frequency electrode 32 may be the same as or different from capacitance of the first capacitor 363 on the second radio frequency electrode 34. This is not limited in this application.

The first power electrode 35 includes a first sub-power electrode 351, a second sub-power electrode 352, and a third sub-power electrode 353 that are sequentially arranged at spacings. The first sub-power electrode 351 is close to the fourth cathode 25. The fourth cathode 25 is electrically connected to the first sub-power electrode 351 through the lead 106, so that the direct current generated by the first power electrode 35 is transmitted to the second photodetector 20, to supply power to the second photodetector 20. The first resistor 361 connects the first sub-power electrode 351 to the second sub-power electrode 352. The filtering element 362 connects the second sub-power electrode 352 to the third sub-power electrode 353. It may be understood that, in another implementation, the filtering element 362 may alternatively connect the first sub-power electrode 351 to the second sub-power electrode 352, and the first resistor 361 may alternatively connect the second sub-power electrode 352 to the third sub-power electrode 353. In another implementation, the first power electrode 35 may alternatively include only the first sub-power electrode 351 and the second sub-power electrode 352. The first resistor 361 connects the first sub-power electrode 351 to the second sub-power electrode 352.

In this implementation, there are two second resistors 365. One second resistor 365 connects the first sub-electrode 321 to the second sub-ground electrode 332. The other second resistor 365 connects the third sub-electrode 341 to the second sub-ground electrode 332. It should be noted that a resistance value of the second resistor 365 connecting the first sub-electrode 321 to the second sub-ground electrode 332 may be the same as or different from a resistance value of the second resistor 365 connecting the third sub-electrode 341 to the second sub-ground electrode 332. This is not limited in this application.

It should be noted that the first resistor 361, the filtering element 362, the first capacitor 363, the second capacitor 364, and the second resistor 365 may be disposed as required. In some implementations, some elements of the first resistor 361, the filtering element 362, the first capacitor 363, the second capacitor 364, and the second resistor 365 may not be disposed. For example, in some implementations, the filtering element 362 may not be disposed, or in another implementation, the second capacitor 363 may not be disposed. Types and quantities of resistors, capacitors, and filtering elements in the lumped element 36 may be set as required.

The photoelectric module 100 in this application is provided with a direct current channel and a radio frequency channel. A path for converting the optical signal into the current signal and a path for converting the current signal into the voltage signal by the photoelectric module 100 in this application are as follows.

The direct current channel is a path through which the first power electrode 35 supplies power to the first photodetector 10 and the second photodetector 20. Specifically, the direct current supplied by the first power electrode 35 is transmitted to the fourth cathode 25. On one hand, the direct current transmitted to the fourth cathode 25 is transmitted to the second anode 24, flows through the lead 106, and then sequentially passes through the third sub-electrode 341 and the second resistor 365 to the second sub-ground electrode 332, to implement a loop and supply a reversed bias voltage to the second photodetector 20. On the other hand, the direct current transmitted to the fourth cathode 25 is transmitted to the third cathode 23, flows through the lead 106, and then sequentially passes through the first sub-ground electrode 331, the second cathode 15, the first anode 14, the first sub-electrode 321, and the second resistor 365 to the second sub-ground electrode 332, to implement a loop and supply a reversed bias voltage to the first photodetector 10. The direct current channel in this application is mainly to supply the reversed bias voltage to the first photodetector 10 and the second photodetector 20, to supply power to the photodetector array 60.

The radio frequency channel is described as follows. Two different optical signals are converted into alternating current signals (namely, radio frequency signals) after being respectively transmitted to the first photosensitive surface 12 and the second photosensitive surface 22. One optical signal that enters the first photodetector 10 from the first photosensitive surface 12 is converted into the alternating current signal. Then, the alternating current signal is transmitted to the first anode 14, flows through the lead 106, and is transmitted to the first sub-electrode 321. Subsequently, the alternating current signal sequentially flows through the first capacitor 363 and the second sub-electrode 322, and is transmitted to the back-end circuit. The alternating current signal transmitted to the back-end circuit is sequentially transmitted to the second sub-ground electrode 332, the second capacitor 364, and the first sub-ground electrode 331 to implement a radio frequency loop. The other optical signal that enters the second photodetector 20 from the second photosensitive surface 22 is converted into the alternating current signal. Then, the alternating current signal is transmitted to the second anode 24, flows through the lead 106, and is transmitted to the third sub-electrode 341. Subsequently, the alternating current signal sequentially passes through the first capacitor 363 and the fourth sub-electrode 342, and is transmitted to the back-end circuit. The alternating current signal transmitted to the back-end circuit flows through the back-end circuit, and is sequentially transmitted to the second sub-ground electrode 332, the second capacitor 364, and the first sub-ground electrode 331, to implement a radio frequency loop. The radio frequency channel in this application is mainly to implement the radio frequency loop and convert the current signal into the voltage signal, to output the radio frequency signal that is required.

The first resistor 361 is to divide a voltage and limit a current. The filtering element 362 may be an inductor or a magnetic bead. The filtering element 362 is to prevent the radio frequency signal of the radio frequency channel from flowing to power. The first capacitor 363 is mainly to perform blocking. To be specific, after reaching the first sub-electrode 321, the direct current generated by the first power electrode 35 cannot continue to reach the second sub-electrode 322, but passes through the second resistor 365 and reaches the first ground electrode 33 to form a loop. This blocks the direct current. Similarly, after reaching the third sub-electrode 341, the direct current generated by the first power electrode 35 cannot continue to reach the fourth sub-electrode 342, but passes through the second resistor 365 and reaches the first ground electrode 33 to form a loop. This blocks the direct current. The second capacitor 364 is mainly to perform blocking. To be specific, after reaching the first sub-ground electrode 331, the direct current generated by the first power electrode 35 cannot continue to reach the second sub-ground electrode 332, but reaches the second cathode 15 to supply power to the first photodetector 10. This blocks the direct current. The second resistor 365 is a part of the direct current channel, and can provide a loop for the direct current channel. The second resistor 365 can implement radio frequency matching, reduce a standing wave ratio of a port, and convert the current signal into the voltage signal.

The first resistor 361 connects the first sub-power electrode 351 to the second sub-power electrode 352, and the filtering element 362 connects the second sub-power electrode 352 to the third sub-power electrode 353, so that the direct current can flow from the third sub-power electrode 353 to the second sub-power electrode 352 to the first sub-power electrode 351 sequentially. In addition, the first resistor 361 can divide the voltage and limit the current.

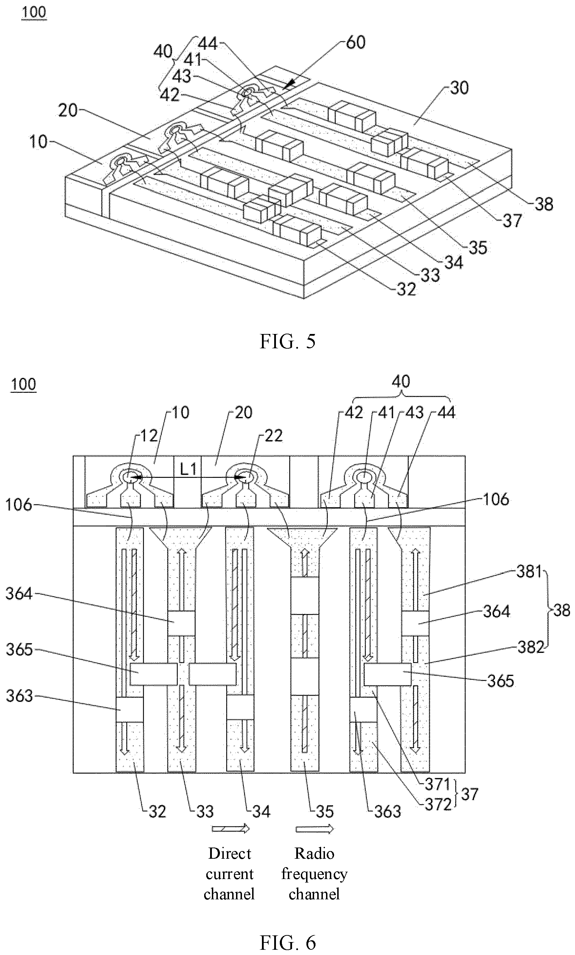

FIG. 5 is a schematic diagram of a three-dimensional structure of the photoelectric module 100. FIG. 6 is a schematic diagram of a planar structure of the photoelectric module 100. The quantity of photodetectors may not be only two, but may alternatively be three, four, five, six, or the like. In this implementation, three photodetectors are used as an example. The photodetector array 60 includes the first photodetector 10, the second photodetector 20, and a third photodetector 40. For structures of the first photodetector 10 and the second photodetector 20 and a connection relationship between the first photodetector 10 and the second photodetector 20, refer to related descriptions in FIG. 3 and FIG. 4. Details are not described herein again. The third photodetector 40 is added. Therefore, in this implementation, a third radio frequency electrode 37 and a second ground electrode 38 are further disposed on the power supply matching circuit 30. The first radio frequency electrode 32, the first ground electrode 33, the second radio frequency electrode 34, the first power electrode 35, the third radio frequency electrode 37, and the second ground electrode 38 are sequentially arranged at spacings. Being arranged at spacings means that the first radio frequency electrode 32, the first ground electrode 33, the second radio frequency electrode 34, the first power electrode 35, the third radio frequency electrode 37, and the second ground electrode 38 are not in contact with each other, that is, there is a gap. In this way, the current signal may be effectively transmitted, and different current signals do not interfere with each other, avoiding a short circuit caused by contact. In addition, the first radio frequency electrode 32, the first ground electrode 33, the second radio frequency electrode 34, the first power electrode 35, the third radio frequency electrode 37, and the second ground electrode 38 are sequentially arranged. This facilitates a connection to the first photodetector 10, the second photodetector 20, and the third photodetector 40, so that a length of a connected lead is minimum, and the first photodetector 10, the second photodetector 20, and the third photodetector 40 share one first power electrode 35.

The third photodetector 40 includes a third photosensitive surface 41 and a fifth cathode 42, a third anode 43, and a sixth cathode 44 that are sequentially arranged. The fifth cathode 42 is electrically connected to the first power electrode 35. The third anode 43 is electrically connected to the third radio frequency electrode 37. The sixth cathode 44 is electrically connected to the second ground electrode 38. The third radio frequency electrode 37 includes a fifth sub-electrode 371 and a sixth sub-electrode 372 that are disposed at spacings. The third anode 43 is electrically connected to the fifth sub-electrode 371. The first capacitor 363 connects the fifth sub-electrode 371 to the sixth sub-electrode 372. The second ground electrode 38 includes a third sub-ground electrode 381 and a fourth sub-ground electrode 382 that are disposed at spacings. The sixth cathode 44 is electrically connected to the third sub-ground electrode 381. The second capacitor 364 connects the third sub-ground electrode 381 to the fourth sub-ground electrode 382. The second resistor 365 connects the fifth sub-electrode 371 to the fourth sub-ground electrode 382.

The direct current supplied by the first power electrode 35 is transmitted to the fifth cathode 42, and is transmitted to the third anode 43. Subsequently, the direct current flows through the lead 106, and sequentially passes through the fifth sub-electrode 371 and the second resistor 365 to the fourth sub-ground electrode 382, to implement a loop and supply power to the third photodetector 40.

One optical signal enters the third photodetector 40 from the third photosensitive surface 41, and is converted into the alternating current signal. Then, the alternating current signal is transmitted to the third anode 43, flows through the lead 106, and is transmitted to the fifth sub-electrode 371. Subsequently, the alternating current signal sequentially flows through the first capacitor 363 and the sixth sub-electrode 372, and enters the back-end circuit. On the other hand, the signal of the back-end circuit is sequentially transmitted to the fourth sub-ground electrode 382, the second capacitor 364, and the third sub-ground electrode 381 to implement a radio frequency loop.

In this implementation, one first power electrode 35 supplies power to three photodetectors. The first photodetector 10 and the second photodetector 20 share the first ground electrode 33. The third photodetector 40 is connected to the second ground electrode 38. This implements sharing of the first power electrode 35 and the first ground electrode 33, and has a simple structure and low costs. The power supply matching circuit 30 in this implementation converts current signals generated by the first photodetector 10, the second photodetector 20, and the third photodetector 40 into voltage signals.

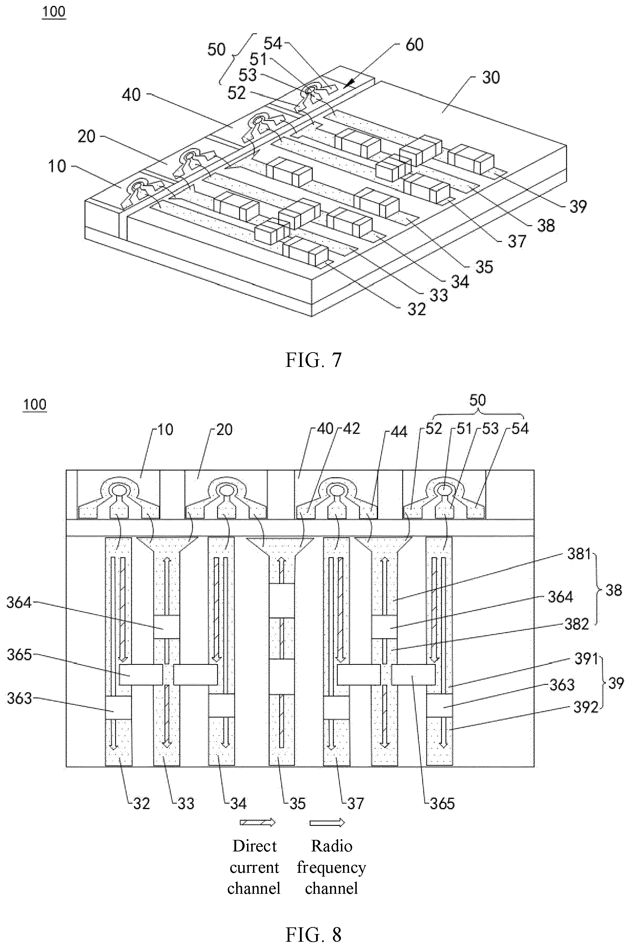

FIG. 7 is a schematic diagram of a three-dimensional structure of the photoelectric module 100. FIG. 8 is a schematic diagram of a planar structure of the photoelectric module 100. In this implementation, four photodetectors are used as an example. The photodetector array 60 includes the first photodetector 10, the second photodetector 20, the third photodetector 40, and a fourth photodetector 50. For structures of the first photodetector 10, the second photodetector 20, and the third photodetector 40 and a connection relationship among the first photodetector 10, the second photodetector 20, and the third photodetector 40, refer to related descriptions in FIG. 3, FIG. 4, FIG. 5, and FIG. 6. Details are not described herein again. The fourth photodetector 50 is added. Therefore, in this implementation, a fourth radio frequency electrode 39 is further disposed on the power supply matching circuit 30. The first radio frequency electrode 32, the first ground electrode 33, the second radio frequency electrode 34, the first power electrode 35, the third radio frequency electrode 37, the second ground electrode 38, and the fourth radio frequency electrode 39 are sequentially arranged at spacings. Being arranged at spacings means that the first radio frequency electrode 32, the first ground electrode 33, the second radio frequency electrode 34, the first power electrode 35, the third radio frequency electrode 37, the second ground electrode 38, and the fourth radio frequency electrode 39 are not in contact with each other, that is, there is a gap. In this way, the current signal may be effectively transmitted, and different current signals do not interfere with each other, avoiding a short circuit caused by contact. In addition, the first radio frequency electrode 32, the first ground electrode 33, the second radio frequency electrode 34, the first power electrode 35, the third radio frequency electrode 37, the second ground electrode 38, and the fourth radio frequency electrode 39 are sequentially arranged. This facilitates a connection to the first photodetector 10, the second photodetector 20, the third photodetector 40, and the fourth photodetector 50, so that a length of a connected lead is minimum, and the first photodetector 10, the second photodetector 20, the third photodetector 40, and the fourth photodetector 50 share one first power electrode 35, the first photodetector 10 and the second photodetector 20 share the first ground electrode 33, and the third photodetector 40 and the fourth photodetector 50 share the second ground electrode 38.

The fourth photodetector 50 includes a fourth photosensitive surface 51, and a seventh cathode 52, a fourth anode 53, and an eighth cathode 54 that are sequentially arranged. The seventh cathode 52 is electrically connected to the eighth cathode 54. The seventh cathode 52 is electrically connected to the second ground electrode 38, and the fourth anode 53 is electrically connected to the fourth radio frequency electrode 39. The fourth radio frequency electrode 39 includes a seventh sub-electrode 391 and an eighth sub-electrode 392 that are disposed at spacings. The fourth anode 53 is electrically connected to the seventh sub-electrode 391. The first capacitor 363 connects the seventh sub-electrode 391 to the eighth sub-electrode 392. The second resistor 365 connects the fourth sub-ground electrode 382 to the seventh sub-electrode 391.

The direct current supplied by the first power electrode 35 is transmitted to the fifth cathode 42, and is transmitted to the sixth cathode 44. Subsequently, the direct current flows through the lead 106, and sequentially passes through the third sub-ground electrode 381, the seventh cathode 52, the fourth anode 53, the seventh sub-electrode 391, and the second resistor 365 to the fourth sub-ground electrode 382, to implement a loop and supply power to the fourth photodetector 50. One optical signal that enters the fourth photodetector 50 from the fourth photosensitive surface 51 is converted into the alternating current signal. Then, the alternating current signal is transmitted to the fourth anode 53, flows through the lead 106, and is transmitted to the seventh sub-electrode 391. Subsequently, the alternating current signal sequentially flows through the first capacitor 363 and the eighth sub-electrode 392, and enters the back-end circuit. On the other hand, the signal of the back-end circuit is sequentially transmitted to the fourth sub-ground electrode 382, the second capacitor 364, and the third sub-ground electrode 381 to implement a radio frequency loop.

In this implementation, one first power electrode 35 supplies power to four photodetectors. The first photodetector 10 and the second photodetector 20 share the first ground electrode 33. The third photodetector 40 and the fourth photodetector 50 share the second ground electrode 38. This implements sharing of the first power electrode 35, the first ground electrode 33, and the second ground electrode 38, and has a simple structure and low costs. The power supply matching circuit 30 in this implementation converts current signals generated by the first photodetector 10, the second photodetector 20, the third photodetector 40, and the fourth photodetector 50 into voltage signals.

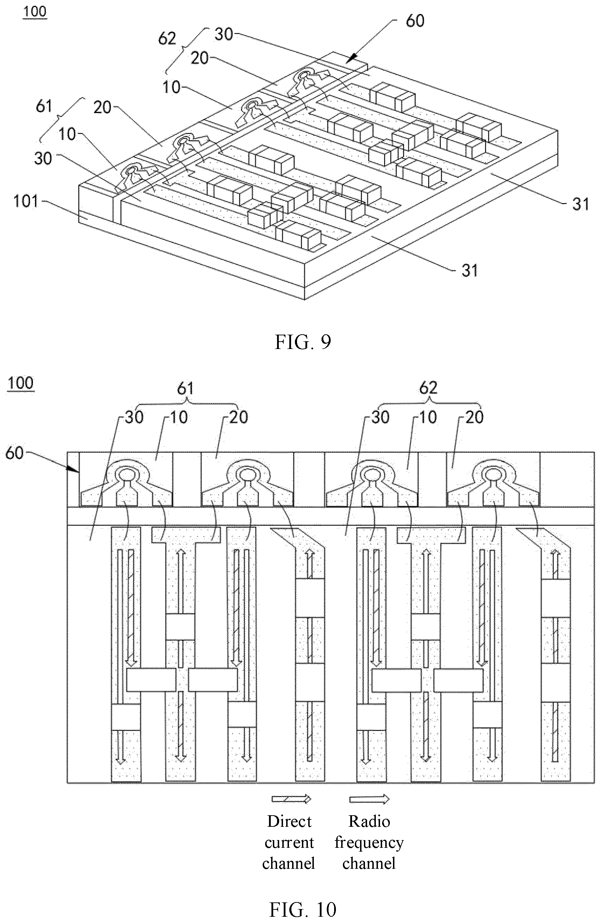

FIG. 9 is a schematic diagram of a three-dimensional structure of the photoelectric module 100. FIG. 10 is a schematic diagram of a planar structure of the photoelectric module 100. In this implementation, four photodetectors are used as an example. The first photodetector 10, the second photodetector 20, and the power supply matching circuit 30 form one submodule, and there are at least two submodules. The two submodules are used as an example, and are respectively referred to as a first submodule 61 and a second submodule 62. The first submodule 61 and the second submodule 62 are distributed on the bearing substrate 101. The dielectric substrate 31 in the first submodule 61 and the dielectric substrate 31 in the second submodule 62 are integrally interconnected and form a flat plate structure. That is, the power supply matching circuit 30 in the first submodule 61 and the power supply matching circuit 30 in the second submodule 62 form an entire power supply matching circuit. In another implementation, the dielectric substrate 31 in the first submodule 61 and the dielectric substrate 31 in the second submodule 62 may alternatively be of a split structure. For structures of the first photodetector 10, the second photodetector 20, and the power supply matching circuit 30 in each submodule and a connection relationship among the first photodetector 10, the second photodetector 20, and the power supply matching circuit 30, refer to related descriptions in FIG. 3 and FIG. 4. Details are not described herein again. It may be understood that there may also be three submodules. In this way, the photoelectric module 100 includes six photodetectors. In another implementation, there may also be four, five, six, or the like submodules. In this implementation, the photodetector array 60 includes two first photodetectors 10 and two second photodetectors 20. As a quantity of submodules increases, the quantity of photodetectors increases, and a quantity of photoelectric signals that can be transmitted also increases accordingly. In this application, the first power electrode 35 and the first ground electrode 33 may be shared. In this way, as the quantity of photodetectors increases, a quantity of electrodes and quantities of resistors and capacitors in the lumped element may be greatly reduced. This reduces design complexity, and greatly reduces system costs and a volume.

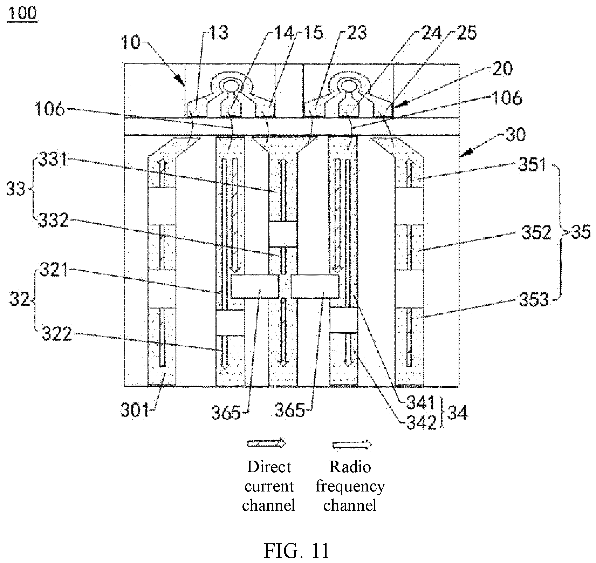

FIG. 11 is a schematic diagram of a structure of the photoelectric module 100. The power supply matching circuit 30 includes a second power electrode 301. The first cathode 13 is electrically connected to the second power electrode 301. In this implementation, there are two power electrodes. For differentiation, one is referred to as the first power electrode 35, and the other is referred to as the second power electrode 301. In this implementation, the first photodetector 10 and the second photodetector 20 share one first ground electrode 33, but do not share a same power electrode. The first power electrode 35 supplies power to the second photodetector 20, and the second power electrode 301 supplies power to the first photodetector 10. Because sharing of the ground electrode 35 is implemented, design complexity of the power supply matching circuit 30 can also be reduced.

The radio frequency channel in this implementation is the same as that in the solutions shown in FIG. 3 and FIG. 4, and details are not described herein again. The direct current channel in this implementation is different from that in the solutions shown in FIG. 3 and FIG. 4. Specifically, the first power electrode 35 supplies power to the second photodetector 20. A power supply path is the same as that in the solutions shown in FIG. 3 and FIG. 4. However, the first power electrode 35 no longer supplies power to the first photodetector 10, that is, the direct current transmitted to the third cathode 23 is not continuously transmitted to the second cathode 15. Therefore, the second power electrode 301 supplies power to the first photodetector 10. A direct current generated by the second power electrode 301 is transmitted to the first cathode 13, is transmitted to the first anode 14, and then passes through the first sub-electrode 321 and the second resistor 365 to the second sub-ground electrode 332, to implement a loop, and supply power to the first photodetector 10. In this implementation, there are two power electrodes and one ground electrode 33. This realizes that two photodetectors share one first ground electrode 33 and simplifies the structure of the power supply matching circuit 30.

In this application, a spacing between any two adjacent photodetectors may be 250 um, 750 um, or the like. For example, as shown in FIG. 6, a spacing L1 between the first photodetector 10 and the second photodetector 20 may be 250 um or 750 um. The spacing L1 between the first photodetector 10 and the second photodetector 20 herein is a distance from a geometric center of the first photosensitive surface 12 of the first photodetector 10 to a geometric center of the second photosensitive surface 22 of the second photodetector 20.

The first resistor 361, the first capacitor 363, the second capacitor 364, and the second resistor 365 may all be packaged in a 01005 (imperial system) size. In this way, the capacitor and resistor have small volumes, a small parasitic parameter, and better performance. A resistance of the second resistor 365 is generally 50 Q to implement radio frequency matching. The second resistor 365 may also be of other resistances. In another implementation, the first resistor 361 and the second resistor 365 may alternatively be implemented by using a thin film evaporation process.

When the power supply matching circuit 30 is a thin film circuit, materials of the first radio frequency electrode 32, the first ground electrode 33, the second radio frequency electrode 34, the first power electrode 35, the third radio frequency electrode 37, the second ground electrode 38, and the fourth radio frequency electrode 39 may be a TiW-NI-AU alloy material, and are generally manufactured on the dielectric substrate 31 by using an evaporation process. A first detector substrate 11, the second detector substrate 21, and the dielectric substrate 31 may be made of aluminum nitride, aluminum trioxide, or the like. The dielectric substrate 31 made of aluminum nitride, aluminum trioxide, or the like has characteristics such as high thermal conductivity, a coefficient of thermal expansion matching a semiconductor chip, and excellent mechanical properties and electrical performance. When the power supply matching circuit 30 is a circuit board circuit, coating, exposure, development, decoating, and the like are generally used to form the first radio frequency electrode 32, the first ground electrode 33, the second radio frequency electrode 34, the first power electrode 35, the third radio frequency electrode 37, the second ground electrode 38, and the fourth radio frequency electrode 39.

A manufacturing process of the photoelectric module 100 in this application is as follows.

A detector substrate (namely, the first detector substrate 11 and the second detector substrate 21) is provided. A spacing between two adjacent photodetectors is adjusted, and at least two photodetectors are fastened to the detector substrate. Alternatively, a detector array is used, and a distance between the detectors is fixed.

The dielectric substrate 31 is provided. Electrodes (including the first radio frequency electrode 32, the first ground electrode 33, the second radio frequency electrode 34, the first power electrode 35, the third radio frequency electrode 37, the second ground electrode 38, and the fourth radio frequency electrode 39, or several of the foregoing electrodes) are formed on the dielectric substrate 31 by using an evaporation process. A shape, a width of each electrode, and a distance between adjacent electrodes are not limited, and may be set according to actual needs. Therefore, reconfigurability of the power supply matching circuit in this application is strong. The capacitor and capacitor are packaged in a 01005 (imperial system) size to form the power supply matching circuit 30.

The detector substrate to which the photodetector is fastened is fastened to the bearing substrate 101, and the power supply matching circuit 30 is fastened to the bearing substrate 101. In a fastening process, relative positions of the photodetector and the power supply matching circuit 30 are adjusted, so that a length of the lead 106 is the smallest. This avoids an excessively long lead 106, introduces a series inductor, affects high-frequency performance, reduces a quantity of leads 106, and reduces costs. After the photodetector and the power supply matching circuit 30 are fastened, bonding is performed through the lead 106, to connect the photodetector and the power supply matching circuit 30.

It should be noted that the first power electrode 35 may work together with a parallel capacitor to filter out ripples, and the parallel capacitor may be designed on the back-end circuit.

In this application, the power supply matching circuit 30 has a simple structure and low costs. There are at least two photodetectors. At least two photodetectors may share one power electrode, and two adjacent photodetectors may share one ground electrode. This reduces quantities of ground electrodes and power electrodes, and quantities of resistors and capacitors required in the lumped element 36. In this way, when the quantity of photodetectors increases, for example, when there are three photodetectors, four photodetectors, or five photodetectors, the quantity of electrodes and the quantity of resistors and capacitors in the lumped element 36 are greatly reduced. The photoelectric module 100 in this application has a simple structure. This reduces design complexity of the power supply matching circuit 30, and has low costs and a small volume.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A power supply matching circuit, wherein the power supply matching circuit is configured to convert a current signal of a photodetector array into a voltage signal, and the photodetector array comprises a first photodetector and a second photodetector;
the first photodetector comprises a first cathode, a first anode, and a second cathode that are sequentially arranged, and the first cathode is electrically connected to the second cathode;
the second photodetector comprises a third cathode, a second anode, and a fourth cathode that are sequentially arranged, and the third cathode is electrically connected to the fourth cathode;
the power supply matching circuit comprises a first power electrode, a first ground electrode, a first radio frequency electrode, and a second radio frequency electrode; and
the first anode is electrically connected to the first radio frequency electrode, the second anode is electrically connected to the second radio frequency electrode, both the second cathode and the third cathode are electrically connected to the first ground electrode, and the fourth cathode is electrically connected to the first power electrode.

2. The power supply matching circuit according to claim 1, wherein the first radio frequency electrode, the first ground electrode, the second radio frequency electrode, and the first power electrode are sequentially arranged at spacings.

3. The power supply matching circuit according to claim 1 or 2, wherein the power supply matching circuit is provided with a lumped element, and the lumped element is electrically connected to the first power electrode, the first ground electrode, the first radio frequency electrode, and the second radio frequency electrode, to convert the current signal into the voltage signal.

4. The power supply matching circuit according to claim 3, wherein the lumped element comprises a first resistor, the first power electrode comprises a first sub-power electrode and a second sub-power electrode, the fourth cathode is electrically connected to the first sub-power electrode, and the first resistor connects the first sub-power electrode to the second sub-power electrode.

5. The power supply matching circuit according to claim 4, wherein the lumped element comprises a filtering element, the first power electrode comprises a third sub-power electrode, the first sub-power electrode, the second sub-power electrode, and the third sub-power electrode are sequentially arranged, and the filtering element connects the second sub-power electrode to the third sub-power electrode, and is configured to protect a power supply.

6. The power supply matching circuit according to claim 3, wherein the lumped element comprises a first capacitor, the first radio frequency electrode comprises a first sub-electrode and a second sub-electrode, the first anode is electrically connected to the first sub-electrode, and the first capacitor connects the first sub-electrode to the second sub-electrode.

7. The power supply matching circuit according to claim 6, wherein the lumped element comprises a second capacitor, the first ground electrode comprises a first sub-ground electrode and a second sub-ground electrode, both the second cathode and the third cathode are electrically connected to the first sub-ground electrode, and the second capacitor connects the first sub-ground electrode to the second sub-ground electrode.

8. The power supply matching circuit according to claim 7, wherein the lumped element comprises a second resistor, and the second resistor connects the first sub-electrode to the second sub-ground electrode.

9. The power supply matching circuit according to any one of claims 1 to 8, wherein the first photodetector, the second photodetector, and the power supply matching circuit form one submodule, and there are at least two submodules.

10. The power supply matching circuit according to any one of claims 1 to 8, wherein the photodetector array comprises a third photodetector, the third photodetector is provided with a fifth cathode, a third anode, and a sixth cathode that are sequentially arranged, the power supply matching circuit comprises a third radio frequency electrode and a second ground electrode, the fifth cathode is electrically connected to the first power electrode, the third anode is electrically connected to the third radio frequency electrode, and the sixth cathode is electrically connected to the second ground electrode.

11. The power supply matching circuit according to claim 10, wherein the first radio frequency electrode, the first ground electrode, the second radio frequency electrode, the first power electrode, the third radio frequency electrode, and the second ground electrode are sequentially arranged at spacings.

12. The power supply matching circuit according to claim 1, wherein the power supply matching circuit comprises a second power electrode, and the first cathode is electrically connected to the second power electrode.

13. An optical receiving assembly, comprising a demultiplexer, a photodetector array, and the power supply matching circuit according to any one of claims 1 to 12, wherein the photodetector array comprises an input end and an output end, the demultiplexer is connected to the input end, and the power supply matching circuit is connected to the output end.

14. A photoelectric system, comprising an optical emitting assembly, an optical fiber, and the optical receiving assembly according to claim 13, wherein the optical fiber connects the optical emitting assembly to the optical receiving assembly.
